**Europäisches Patentamt**

**European Patent Office**

**Office européen des brevets**

(11) Publication number: **0 042 189**
**A1**

(12) **EUROPEAN PATENT APPLICATION**

(21) Application number: **81200628.6**

(22) Date of filing: **09.06.81**

(51) Int. Cl.³: **F 16 C 19/04,** F 16 C 33/58, F 16 C 13/02

(30) Priority: **12.06.80 GB 8019230**

(71) Applicant: **Garnett, David Morris, Manse Lane, Knaresborough W. Yorkshire HG5 8LS (GB)**

(43) Date of publication of application: **23.12.81 Bulletin 81/51**

(72) Inventor: **Garnett, David Morris, Manse Lane, Knaresborough W. Yorkshire HG5 8LS (GB)**

(84) Designated Contracting States: **AT BE CH DE FR GB IT LI LU NL SE**

(74) Representative: **Denmark, James, c/o Bailey Walsh & Co. 5 York Place, Leeds LS1 2SD Yorkshire (GB)**

(54) **Improvements relating to roller bearings.**

㊶⑦ The invention provides a roller bearing which comprises inner and outer races (14a, 14b), preferably of plastics material, and one of the races is provided with a flange (22) which overlaps the other race when viewed in axial direction, to prevent excessive relative tilting between the races to such an extent as would permit the rolling elements (20) of the bearing to fall from between the races.

ACTORUM AG

-1-

## Improvements relating to roller bearings

This invention relates to roller bearings comprising an inner race and an outer race, between which are the rolling elements, normally balls, but possibly rollers, to enable the inner and outer races to rotate one relative to another in use of the bearings.

In one particular application of the present invention, the said roller bearing also serves the purpose of providing runner wheels for suspended sliding doors, the said runner wheels enabling the doors not only to be suspended from a frame, but also to run on a track defined by the said frame, and on which the runner wheels roll.

In a particularly specific application, the said suspended doors may be aluminium framed and glazed doors as used in a greenhouse. In this application, the runner wheels are mounted on a cranked plate, to enable the wheels to lie in the plane of the door in which the centre of gravity lies to ensure smoothest running of the door in use. It is usual to arrange these doors so that they can be mounted on or removed from the greenhouse frame by which they are supported and on which they run, the placement on and removal from the frame involving a slight lifting action to enable the wheel runners to engage over a guide track.

0042189

There have been produced runner wheels for this purpose, such wheels being of plastics material, apart from the rolling elements in the bearing, but a difficulty has been discovered in that in practice as the doors are suspended by cranked plates and also they may be handled roughly when being positioned on or removed from the frame a twisting is imparted to the roller wheels, and as the inner and outer races are plastic, this twisting tends to displace the inner and outer races one relative to another, and the roller elements tend to become displaced or dislodged. The present invention was made specifically to overcome this problem, but the roller bearing according to the invention will have many other applications, such as the roller bearings of rollers of conveyor rollers.

In accordance with the present invention a roller bearing comprises inner and outer races of which at least one is of plastics material, one of the races being provided with a restraining flange or shoulder, said flange or shoulder being located so as not to foul with the other race when the bearing is in use and there is relative rotation between the races, but which acts to contact the other race to prevent misalignment between the inner and outer races to such an extent to permit the rolling elements to fall from the bearing.

It can be seen that a bearing of this arrangement will be extremely useful in the door suspension application mentioned above, because if there is any relative twisting applied to the greenhouse door, the said flange or shoulder will limit the extent of twisting of the runner wheels, keeping the rolling elements in position.

The said flange is preferably integral with the inner race and extends radially outwardly so as to overlap the outer race, but the mechanically inverted arrangement can be adopted.

Alternatively, one of the races may have a radially extending restraining flange located to engage a bore in the other race in the event of said misalignment taking place.

Both races preferably are of any suitable plastics material, and may be of the plastics material currently used for runner wheels on greenhouse doors. The outer race may be a shaped profile for the purposes of engaging the edge of the plate which serves as the guide track in the application of the invention to greenhouse doors.

The rolling elements of the bearings will normally be of steel, but it is not necessary that they should be of this material. They may be of another metal or may be of plastic.

Embodiments of the present invention will now be described, by way of example, with reference to the accompanying drawing, of which Figure 1 shows in sectional elevation a roller bearing according to one embodiment of the invention, when used for the support of a glazed greenhouse door having an aluminium frame, Figure 2 shows a second embodiment of the invention in roller bearings used in conveyor rollers, Fig. 3 is a sectional elevation of another embodiment of the invention, and Figure 4 illustrates the effect which the present invention seeks to avoid.

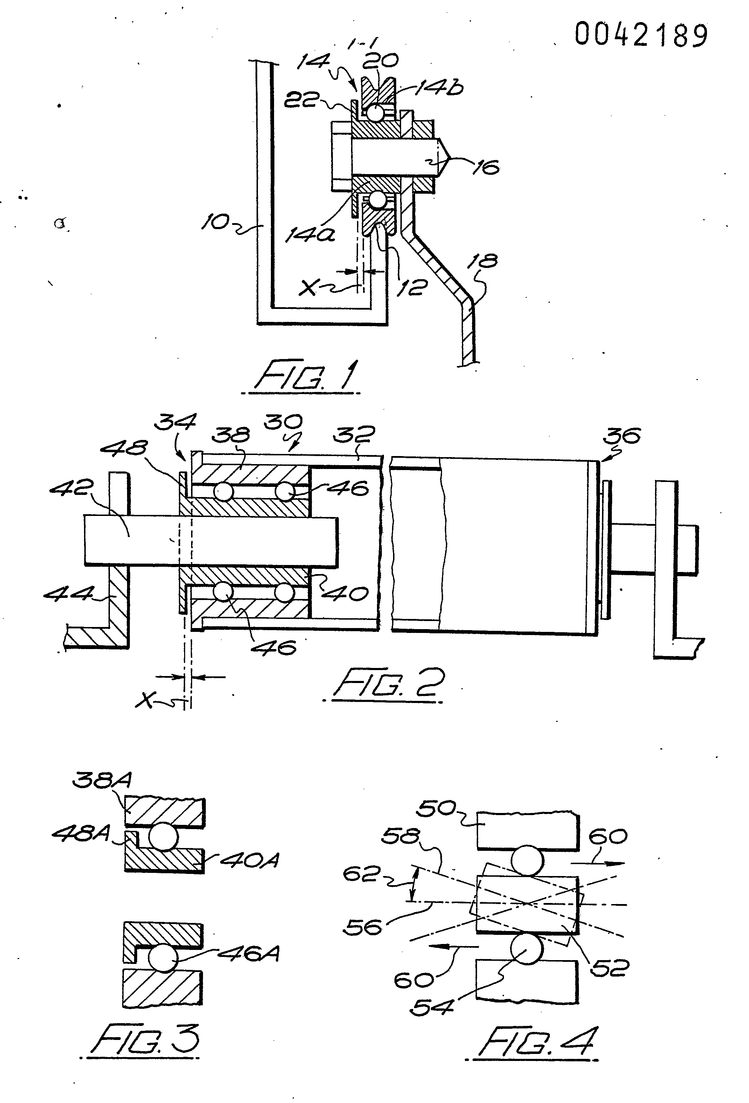

Referring to the drawing, in Fig. 1 reference numberal 10 indicates an upright plate section of an aluminium greenhouse frame, the plate section having an upper horizontal edge 12 on which run a plurality of runner wheels 14. The runner wheels 14 are connected by bolt 16 to a crank plate portion 18 on the top rail of an aluminium frame of a glazed door. So far described, the structure is conventional, and the present invention is concerned mainly with the structure of the bearing 14.

The bearing 14 will be seen to comprise an inner race 14a and an outer race 14b, between which are roller elements in the form of balls 20. At one end, the inner race 14a is provided with a radially extending flange 22, which, when viewed in the axial direction of the bearing overlaps the outer race 14b, but there is a small clearance X between the flange 22 and the said outer face, so that they will not foul during running of the runner wheel along the guide track 12. However, should the door be moved from the frame in a roughly handled fashion, which in practice is normally the case, if any twisting force is applied to the bearing, then the flange 22 will be urged against the outer race 14b as soon as the small clearance X has been taken up, and further relative twisting of the inner and outer races will be avoided, whereby dislodgement and displacement of the roller elements will also be avoided, and the runner wheels will remain in tact.

Referring now to Fig. 2, which shows another application of the invention, in this figure there is shown a conveyor roller 30 of a conveyor roller sytem. The roller 30 comprises a sleeve 32 in the ends of which are roller bearings 34 and 36. These bearings are identical, are according to the invention, and only one is illustrated in the sectional elevation. The roller bearing 34 comprises an outer race of plastics material 38, and inner race 40. The inner race 40 has a central cylindrical bore in which is located a supporting stub shaft 42, the shaft 42 resting on an angle iron support 44. The inner race 40 is also of plastics material, and rotates relative to the outer race 38 by virtue of two rows of balls 46.

In accordance with the embodiment of the invention, the inner race 40 is provided with an overlapping flange 48,

0042189

similar to the flange 22 in the Fig. 1 embodiment, which prevents more than a predetermined amount of misalignment between the races 38 and 40, and in particular prevents misalignment to such an extent to permit the balls 46 to drop out. This can happen if the flange 48 were not provided, and the rollers are assembled roughly.

Because the bearings 34 are mounted on cantilevered shafts, they will be subject to a certain loading which will tend to make the races 38 and 40 tilt into, to axial misalignment.

As in the Fig. 1 embodiment, when the roller bearings 34 are in normal position, the races are designed to run freely in that the flange 48 is spaced from the outer race end face by the distance X.

In the embodiment illustrated in Fig. 3, the outer race 38A has a constant size bore in which is located the inner race 40A the inner race 40A having a radially outwardly extending flange 48A which stops short of the bore of the outer race 38A by distance X. As long as there is no misalignment between the races, but if there is sufficient misalignment the flange 48A will bear on the bore of the outer race 38A preventing the balls 46A from dropping from the bearings.

Only three examples of utilisation of the invention have been given, but it will be appreciated that the applications can be many and varied, and the invention is particularly suitable to bearings having plastic races, because these races will tend to distort more and become more misaligned than metal races because of the resilient nature of the material.

In Fig. 4 there is illustrated a misalignment effect which the present invention seeks to avoid. In Fig. 4 there are illustrated diagrammatically an outer race 50, an inner race 52 and roller elements 54 between the races, enabling them to rotate relatively about the axis 56. Also in Fig. 3, the inner race 52 is shown in dotted lines in a position in which its axis, as indicated by numeral 58, is misaligned in relation to the axis 56. This is the effect which the present invention seeks to avoid or minimise, because when the inner race 52 is in the dotted line position the balls 54 can drop from the bearing as indicated by arrows 60. The flanges 22 and 48 of the Figs. 1 and 2 embodiments limit the degree of misalignment represented by angle 62 in Fig. 3, but of course a limited degree of misalignment is allowed by virtue of the clearance X between the flange 22 and 48 and the associated outer race, but such degree of misalignment is limited to the extent to prevent the balls or other roller elements from falling from the roller bearing.

-7-

0042189

CLAIMS:-

1.    A roller bearing comprising inner and outer races of which at least one is of plastics material, one of the races being provided with a restraining flange or shoulder said flange or shoulder being located so as not to foul with the other race when the bearing is in use and there is relative rotation between the races, but which acts to contact the other race to prevent misalignment between the inner and outer races to such an extent to permit the rolling elements to fall from the bearing.

2.    A roller bearing according to claim 1, wherein there is a restraining flange integral with the inner race and which extends radially outwardly so as to overlap and end face of the outer race.

3.    A roller bearing according to claim 1, wherein one of the races has a radially extending restraining flange located to engage a bore in the other race in the event of said misalignment taking place.

4.    A roller bearing according to claim 1, 2 or 3, wherein the outer race is a shaped profile for the purposes of engaging a guide track.

5.    A roller bearing according to any preceding claim, wherein both races are of plastics material.

0042189

_FIG. 1_

_FIG. 2_

_FIG. 3_

_FIG. 4_

European Patent Office

**EUROPEAN SEARCH REPORT**

0042189

Application number

EP 81 20 0628

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 230 022 (ZNAMIROWSKI)<br>* Whole document * | 1-5 | F 16 C 19/04<br>33/58<br>13/02 |
| X | FR - A - 2 339 773 (SIPA)<br>* Page 2, lines 13-26; page 3, lines 9-10; figures * | 1,2,4,5 | |
| X | GB - A - 1 266 327 (ANTHONY)<br>* Whole document * | 1-3,5 | |
| X | FR - A - 2 114 537 (RUBDER)<br>* Pages 5,6; figures 5,6,8,9 *<br>& GB - A - 1 319 680 | 1-3,5 | TECHNICAL FIELDS SEARCHED (Int. Cl.³)<br><br>F 16 C |
| X | FR - A - 1 431 409 (SIMPLON)<br>* Whole document * | 1-3,5 | |
| X | GB - A - 1 434 940 (BEARINGS)<br>* Whole document * | 1,2,5 | |

CATEGORY OF CITED DOCUMENTS

X: particularly relevant
A: technological background
O: non-written disclosure
P: intermediate document
T: theory or principle unde ., ng the invention
E: conflicting application
D: document cited in the application
L: citation for other reasons

&: member of the same patent family, corresponding document

| | | | |
|---|---|---|---|
| The present search report has been drawn up for all claims | | | |
| Place of search | Date of completion of the search | Examiner | |
| The Hague | 20-08-1981 | ORTHLIEB | |

EPO Form 1503.1   06.78